Europäisches Patentamt

European Patent Office

Office européen des brevets

(19)

(11) Veröffentlichungsnummer: **0 071 796**
**B1**

## (12) EUROPÄISCHE PATENTSCHRIFT

(45) Veröffentlichungstag der Patentschrift:
27.11.85

(21) Anmeldenummer: **82106351.8**

(22) Anmeldetag: **15.07.82**

(51) Int. Cl.⁴: **B 66 F 9/075, E 02 F 9/18**

(54) **Knicklenker mit querverschiebbarem Gegengewicht.**

(30) Priorität: **08.08.81 DE 3131512**

(43) Veröffentlichungstag der Anmeldung:
**16.02.83 Patentblatt 83/7**

(45) Bekanntmachung des Hinweises auf die Patenterteilung:
**27.11.85 Patentblatt 85/48**

(84) Benannte Vertragsstaaten:
**AT CH FR GB IT LI SE**

(56) Entgegenhaltungen:
**DE - B - 1 057 534**
**US - A - 2 763 385**
**US - A - 3 653 486**

(73) Patentinhaber: **Karl Schaeff GmbH & Co.,**
**Postfach 20 Seestrasse 172, D-7183 Langenburg/Württ.**
**(DE)**

(72) Erfinder: **Schaeff, Hans, D-7183 Langenburg (DE)**

(74) Vertreter: **Raeck, Wilfrid, Dipl.-Ing., Moserstrasse 8,**
**D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Fahrzeug mit Knicklenkung, auf dessen Vorderwagen ein Arbeitsgerät, insbesondere eine Ladeschaufel oder Staplereinrichtung, und auf dessen Hinterwagen der Fahrerstand und ein Gegengewicht angeordnet sind.

Unter einem Fahrzeug mit Knicklenkung wird im allgemeinen und im Rahmen der vorliegenden Erfindung ein Fahrzeug verstanden, das eine Vorderachse und eine Hinterachse jeweils mit zwei Rädern aufweist, die in Fahrzeugteilrahmen starr gelagert sind, so dass ein Vorderwagen sowie ein Hinterwagen entsteht. Diese beiden Fahrzeugteilrahmen sind im allgemeinen in der Fahrzeugmitte insbesondere mittig zwischen den beiden Radachsen durch eine senkrechte Gelenkachse schwenkbar miteinander verbunden.

Bei einem Arbeitsfahrzeug der oben bezeichneten Art hat die Knicklenkung den Vorteil einer erhöhten Manövrierfähigkeit, weil das Fahrzeug praktisch im Stand gelenkt werden kann, was beim Aufnehmen oder Absetzen von Lasten mittels der Ladeschaufel oder mit Hilfe einer Hubstapeleinrichtung die Arbeitsweise ganz erheblich erleichtert und vor allem auch auf engstem Raum ermöglicht.

Diesen Vorteilen stehen gewisse Beschränkungen bei der Lastbewältigung im Hinblick auf die Standsicherung bzw. Kippfestigkeit des Fahrzeuges gegenüber. Durch einen Lenkeinschlag des Knicklenkungsfahrzeuges verlagert sich der im Idealfall bei durch Gegengewicht kompensierter Last etwa über dem Knickgelenk befindliche Gesamtschwerpunkt des Fahrzeuges von der Längsachse weg in Richtung auf den Scheitel des gedachten Winkels, dessen Schenkel durch die Radachsen des Vorder- und Hinterwagens verlaufen. Mit anderen Worten, werden durch einen Lenkeinschlag die bzgl. des Lenkkreises radial innen liegenden Räder belastet. Dadurch verringert sich die Standsicherheit des Fahrzeuges und die Kippgefahr nach der Seite, in welche der Lenkeinschlag erfolgt ist, nimmt zu. Dies ist besonders dann der Fall, wenn das Fahrzeug auf nicht ebenem Untergrund arbeitet oder von seinen vier Rädern drei an zueinander ungünstigen Auflagerstellen am Untergrund abgestützt sind.

Aus der DE-B 1 057 543 ist ein Fahrzeug mit einer am vorderen Ende angeordneten Hubstaplereinrichtung in Form eines senkrechten Mastes bekannt, an dem ein Hubschlitten mit einem quer verschiebbaren Ausleger geführt ist. Das Fahrzeug besitzt einen einheitlichen Rahmen, der über zwei Räder einer Vorderachse und ein drittes rückwärtiges Lenkrad abgestützt ist. An der Rückseite des Fahrzeugrahmens ist ein Gegengewicht auf einer der annähernd kreisbogenförmigen Heckform des Fahrzeuges folgenden Linie nach der einen oder anderen Seite verschiebbar, um die Standfestigkeit allein für die Zustände zu erhöhen, in denen die auf dem quer zur Fahrzeuglängsachse verschiebbaren Ausleger am Hubschlitten der Staplereinrichtung ruhende Last durch eine ungewöhnliche aussermittige Lage ihres Schwerpunktes das Lastmoment vergrössert. Durch das seitlich verlagerte Gegengewicht am rückwärtigen Fahrzeugende wird in diesem Fall die Seitenstabilität erhöht, andererseits jedoch die Längsstabilität verringert.

Weiterhin ist aus der DE-B 914 115 ein ähnliches Hubstaplerfahrzeug bekannt, bei dem der in sich starre Rahmen am vorderen Ende durch eine Querachse mit zwei Bodenrädern und im rückwärtigen Bereich durch ein einzelnes Lenkrad abgestützt ist. Da das Lenkrad einen grossen Lenkwinkel beschreiben soll, um die Wendigkeit des Fahrzeuges zu gewährleisten, müsste normalerweise dieser Lenkraum für das Lenkrad frei gehalten werden. Um abnehmbare zusätzliche Gegengewichte zu vermeiden, ist bei diesem bekannten Fahrzeug die Lenkradstütze selbst als Gegengewicht für die Hublast ausgebildet und dem für die Drehbewegung des Lenkrades im Fahrzeugrahmen ausgesparten Raum angepasst. Durch die in der Draufsicht kreisförmige Ausbildung des Gegengewichtes wird sorgfältig darauf geachtet, dass während der Lenkvorgänge keine Gewichtsverlagerungen stattfinden, da dies zu einer einseitigen Belastung des einen oder anderen Vorderrades führen würde.

Der Erfindung liegt die Aufgabe zugrunde, ein Arbeitsfahrzeug mit Knicklenkung der eingangs angegebenen Art dahingehend zu verbessern, dass mit Hilfe von verhältnismässig einfach installierbaren zusätzlichen Bauelementen durch einen teilweisen Ausgleich des schon allein durch Lenkbewegungen verlagerten Schwenkpunktes die Standsicherheit des Fahrzeuges zur Erhöhung der Nutzlast und/oder zum Zweck erweiterter Einsatzmöglichkeit automatisch verbessert wird, ohne dazu die Gesamtabmessungen des Fahrzeuges nennenswert zu vergrössern.

Erfindungsgemäss wird diese Aufgabe dadurch gelöst, dass ein Anteil des Gegengewichtes auf einer im allgemeinen quer zur Fahrtrichtung verlaufenden, am rückwärtigen Ende des Hinterwagens angeordneten Führung verschiebbar gehalten und über eine Steuerung derart mit dem Vorderwagen gekoppelt ist, dass jedem Lenkeinschlag eine insbesondere proportionale, dessen Richtung entgegengesetzte Verschiebung des Gegengewichtes zugeordnet ist.

Mit der vorgeschlagenen Bauform lässt sich das Gegengewicht aufteilen, wobei durch die Verschiebbarkeit des einen Anteils, z. B. bei Verringerung des Gesamtgewichtes, der gleiche Wirkungsgrad wie bei einem grösseren Gewicht erreicht wird. Der Vorschlag kommt ausserdem dem Bestreben entgegen, ein solches Fahrzeug möglichst kurz zu bauen und damit eine gute Manövrierfähigkeit zu ermöglichen, wobei man darauf verzichtet, weit nach hinten ausladende Anordnungen des Fahrzeugmotors oder dergleichen zu verwenden, bei denen solche Gegengewichtsanordnungen beim Rangieren die Sicht nach hinten in Richtung auf den Boden versperren. Der Fahrzeugführer braucht seine Aufmerksamkeit nicht von der Beobachtung des Arbeitsgerätes und des Manövrierfeldes abzuwenden, da die Verschiebung des Gegengewichtes automatisch durch die Lenksteuerung betätigt wird. Indem das verschiebbare Gegengewicht in die dem Lenkeinschlag entgegengesetzte Richtung bewegt wird, lässt sich eine nicht unbeträchtliche Kompensation der weiter oben beschriebenen Schwerpunktsverlagerung und damit eine verbesserte Standsicherheit des Fahrzeuges erzielen.

Bei einer bevorzugten Ausführungsform der Erfingung kann das verschiebbare Gegengewicht eine Breite aufweisen, die etwa einem Viertel der gesamten Fahrzeugbreite entspricht. Auf diese Weise lässt sich der Schwerpunkt des verschiebbaren Gegengewichtes noch über eine ausreichend grosse Querabmessung, d. h. über ca. ¾ der Fahrzeugbreite verlagern. Selbstverständlich sind noch zu einem grösseren Wirkungsgrad führende weitergehende Verschiebungen des Gegengewichtes möglich, wenn das Gegengewicht in den Endstellungen auf seinen Führungsschienen über die Fahrzeugbreite hinausragt. Dieser Vorschlag ist auch unter Berücksichtigung der Manövriersicherheit durchführbar, wenn die über die Fahrzeugbreite hinausragende Endstellung des Gegengewichtes noch innerhalb des Hüllkreises verbleibt, d. h. des Umkreises, der von den grössten Ausladungsabmessungen beschrieben wird, z. B. von der Ecke zwischen Vorderkante und Seitenkante einer Ladeschaufel oder von den Begrenzungen einer auf einer Hubgabel ruhenden Last.

Als Antrieb zur Begrenzung des verschiebbaren Gegengewichtes können beliebige geeignete und zur Verfügung stehende Hilfsmittel vorgesehen werden, z. B. ein Hydraulikmotor, der von der Lenkhydraulik aus gesteuert wird oder auch eine insbesondere an den Vorderwagen angeschlossene Seilzugeinrichtung. Bei einer zweckmässigen Ausführungsform kann das verschiebbare Gegengewicht mit zu beiden Seiten des Hinterwagens über Rollen geführte Seillängen an den Vorderwagen angeschlossen und somit direkt von dessen Lenkbewegungen gesteuert sein.

Weitere Vorteile und Merkmale der Erfindung ergeben sich aus den Ansprüchen und der nachfolgenden Beschreibung eines Ausführungsbeispiels anhand der Zeichnung. Es zeigen

Fig. 1 eine Seitenansicht eines mit einem Staplerrahmen versehenen Knicklenkerfahrzeuges nach der Erfindung,

Fig. 2 eine Draufsicht auf das Fahrzeug nach Fig. 1 und

Fig. 3 eine Draufsicht ähnlich Fig. 2, jedoch im Zustand eines Lenkeinschlages zwischen Vorder- und Hinterwagen und mit dem dabei entsprechend verschobenen Gegengewicht.

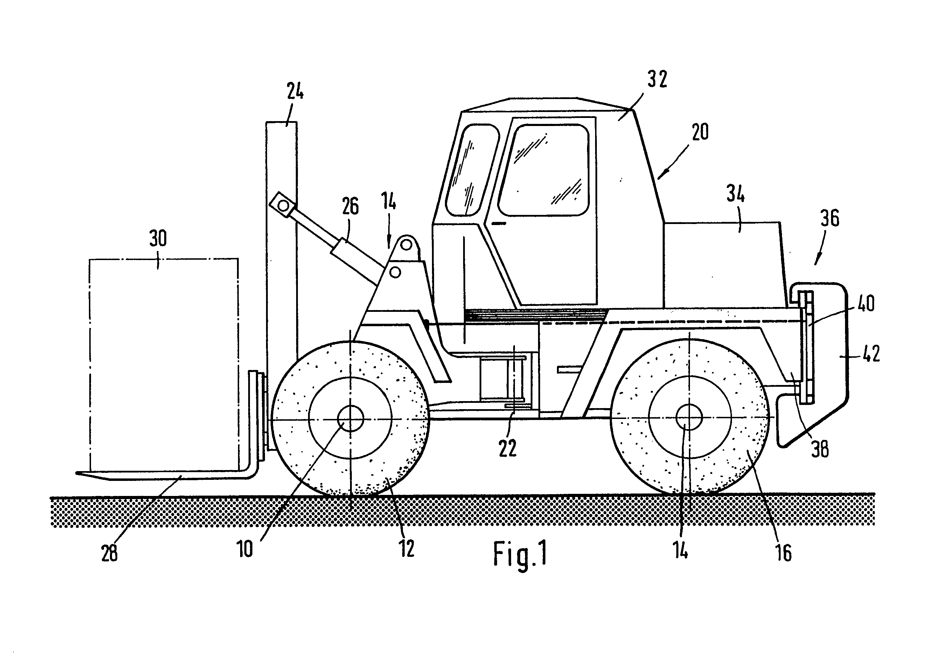

Entsprechend Fig. 1 weist ein als Knicklenker ausgeführtes Arbeitsfahrzeug einen über eine Radachse 10 mit Rädern 12 abgestützten Vorderwagen 14 sowie einen über eine Radachse 16 und Räder 18 abgestützten Hinterwagen 20 auf, die in üblicher Weise durch eine senkrechte Gelenkachse 22 miteinander verbunden sind. Auf dem Vorderwagen 14 ist ein Hubgerüst 24 um eine Querachse gelenkig gehaltert und durch einen Hydraulikzylinder 26 in seiner Neigung einstellbar. Entlang des Hubgerüstes ist eine Staplergabel 28 geführt, auf der eine Last 30 angedeutet ist.

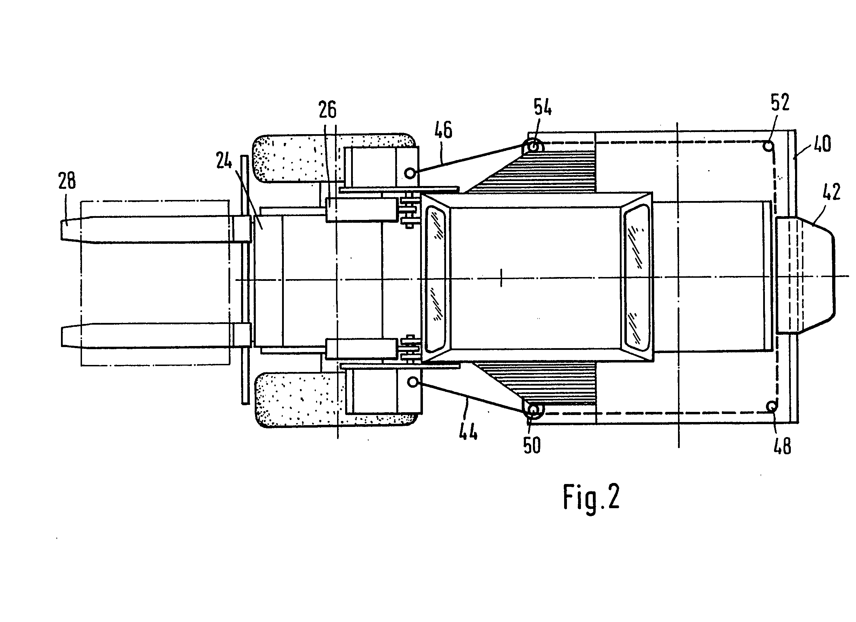

Der Hinterwagen 20 überragt mit seiner Fahrerkabine 32 die Knickachse 22 und einen Teil des Vorderwagens und ist ferner mit Antriebsaggregat 34 und einem allgemein mit 36 bezeichneten Gegengewicht versehen. Das Gegengewicht 36 umfasst einen am Hinterwagen 20 ortsfesten, nicht näher gezeichneten Bestandteil 38, von dem wenigstens ein Abschnitt als Führung 40 für ein verschiebbares Gegengewicht 42 ausgebildet ist. Das verschiebbare Gegengewicht 42 enthält querverlaufende Ausnehmungen, in denen die oberen und unteren Gleitbahnen der Führungsschiene 40 aufgenommen und entsprechend Fig. 1 überfasst sind. Die in Fig. 1 gezeigte zweckmässige Umrissform des verschiebbaren Gegengewichtes 42 ist nicht bindend, sondern könnte z. B. auch weiter nach oben verlängert werden, ohne die Sicht des Fahrzeugführers nennenswert einzuschränken. Entsprechend der Draufsicht gemäss Fig. 2 besitzt das gezeigte Gegengewicht eine Breite von etwa ein Drittel der Fahrzeugbreite. Auch andere Abmessungen sind möglich. Man erkennt, dass das auf der Führung 40 verschiebbare Gegengewicht 42 mit Hilfe von Seilzügen 44, 46 und Umlenkrollen 48 bis 54 an den Vorderwagen 14 so angeschlossen ist, dass in der Geradeausstellung das verschiebbare Gegengewicht 42 sich bezüglich der Fahrzeug-Längsmittelachse symmetrisch ausgerichtet befindet.

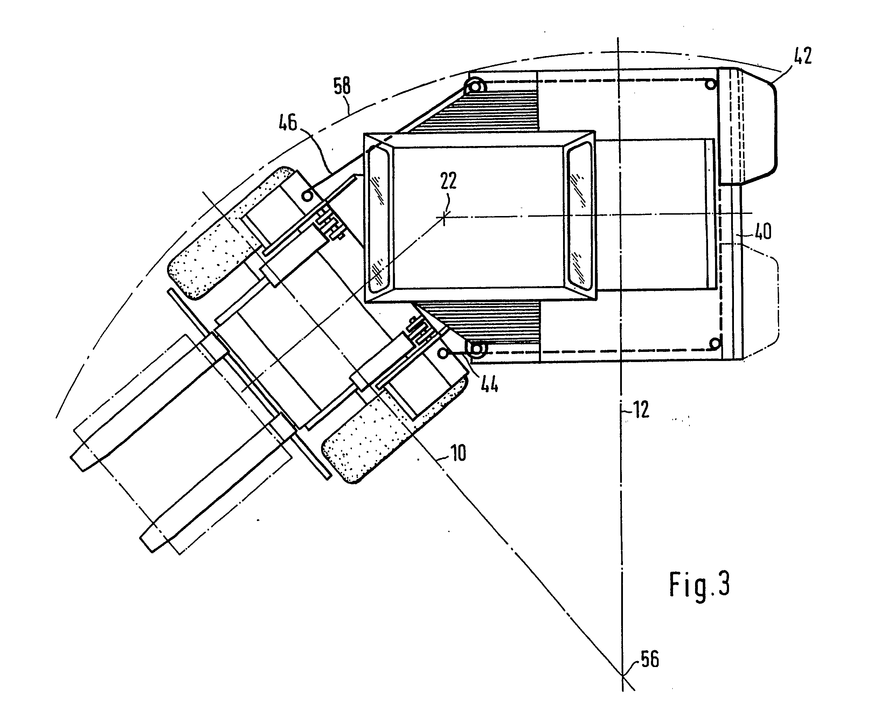

Fig. 3 zeigt einen Zustand des Fahrzeuges mit eingeschlagener Lenkung, wobei nichtgezeigte hydraulische Lenkzylinder beiderseits der Knickachse ausgefahren bzw. verkürzt sind. Die mit unterbrochenen Linien angedeuteten Verlängerungen der Radachsen 10, 14 bilden den Krümmungsmittelpunkt 56 für den ebenfalls mit unterbrochenen Linien angedeuteten Hüllkreis 58, den das Fahrzeug bei dem gezeigten Lenkeinschlag ohne aussen anzustossen durchfahren kann. Man erkennt, dass das verschiebbare Gegengewicht 42 sich in der dem Lenkeinschlag entgegengesetzten Richtung verschoben befindet, da die Seilzüge 44, 46 durch den Vorderwagen entsprechend bewegt worden sind. Selbstverständlich könnte das verschiebbare Gegengewicht 42 auch noch seitlich bis über den Hüllkreis 58 hinaus verschoben werden.

**Patentansprüche**

1. Fahrzeug mit Knicklenkung, auf dessen Vorderwagen ein Arbeitsgerät, insbesondere eine Ladeschaufel oder eine Staplereinrichtung, und auf dessen Hinterwagen ein Gegengewicht angeordnet ist, dadurch gekennzeichnet, dass ein Anteil (42) des Gegengewichtes (36) auf einer im allgemeinen quer zur Fahrtrichtung verlaufenden, am rückwärtigen Ende des Hinterwagens angeordneten Führung (40) verschiebbar gehalten und über eine Steuerung derart mit dem Vorderwagen (14) gekoppelt ist, dass jedem Lenkeinschlag eine insbesondere proportionale, dessen Richtung entgegengesetzte Verschiebung des Gegengewichtsanteils zugeordnet ist.

2. Fahrzeug nach Anspruch 1, dadurch gekennzeichnet, dass wenigstens ein Abschnitt des am Fahrzeug ortsfesten Gegengewichtes (36) als Führungsschiene (40) für das verschiebbare Gegengewicht (42) ausgebildet ist.

3. Fahrzeug nach Anspruch 1 oder 2, dadurch gekennzeichnet, dass das verschiebbare Gegengewicht (42) eine Breite aufweist, die etwa ¼ der gesamten Fahrzeugbreite entspricht.

4. Fahrzeug nach einem der vorhergehenden Ansprüche, dadurch gekennzeichnet, dass das verschiebbare Gegengewicht (42) auf seinen Führungsschienen in den Endstellungen über die Fahrzeugbreite hinausragt.

5. Fahrzeug nach einem der vorhergehenden Ansprüche, dadurch gekennzeichnet, dass als Antrieb des verschiebbaren Gegengewichtes ein Hydraulikmotor, insbesondere ein Hydraulikzylinder vorgesehen ist, der von dem Verdrängeröl einer hydraulischen Lenkeinrichtung aus gesteuert bzw. beaufschlagt ist.

6. Fahrzeug nach einem der Ansprüche 1 bis 4, dadurch gekennzeichnet, dass als Antrieb für das verschiebbare Gegengewicht eine insbesondere an den Vorderwagen (14) angeschlossene Seilzugeinrichtung (44, 46) vorgesehen ist.

7. Fahrzeug nach Anspruch 6, dadurch gekennzeichnet, dass das verschiebbare Gegengewicht (42) mit zu beiden Seiten des Hinterwagens (20) über Rollen (48–54) geführte Seillängen (44, 46) an den Vorderwagen (14) angeschlossen und somit direkt von dessen Lenkbewegungen gesteuert ist.

8. Fahrzeug nach Anspruch 2, dadurch gekennzeichnet, dass die Führungsschiene (40) obere und untere Gleitführungen aufweist, die jeweils vom verschiebbaren Gegengewicht (42) überfasst bzw. in einer querverrlaufenden Ausnehmung aufgenommen sind.

## Claims

1. An articulated vehicle, on the forward carriage of which a working device, especially a loading shovel or stacking implement, and on the rear carriage of which a counterweight is arranged, characterized in that a portion (42) of said counterweight (36) is slidably mounted on a guide means (40) extending generally transverse to the direction of travel and disposed on the rear end of said rear carriage, and is coupled by control means with said forward carriage (14) such that any excursion is associated with an especially proportional displacement of a said counterweight portion opposite the direction of pivot excursion.

2. Vehicle according to claim 1, characterized in that at least a portion of the counterweight (36) stationary on the vehicle is formed as guide rail (40) for the displaceable counterweight (42).

3. Vehicle according to claim 1 or 2, characterized in that the displaceable counterweight (42) has a width substantially about ¼ of the overall vehicle width.

4. Vehicle according to one of the preceding claims, characterized in that the displaceable counterweight (42) in its end positions on the guiderails projects beyond the vehicle width.

5. Vehicle according to one of the preceding claims characterized in that as drive for the displaceable counterweight a hydraulic motor, especially a hydraulic cylinder is provided, which is controlled by the displacement oil of a hydraulic steering device.

6. Vehicle according to one of the claims 1 to 4, characterized in that as drive for the displaceable counterweight cable means (44, 46), especially when connected to the forward carriage (14) are provided.

7. Vehicle according to claim 6, characterized in that the displaceable counterweight (42) is connected to the forward carriage by means of cable lengths (44, 46) guided by sheaves (48–52) on each side of the rear carriage and so being directly controlled by the steering motions of the forward carriage.

8. Vehicle according to claim 2, characterized in that the guide rail (40) has upper and lower glide tracks, each of which being enclosed by the displaceable counterweight (42) or accommodated in a transversely extending recess.

## Revendications

1. Véhicule à direction pivotante, sur le chariot avant duquel est disposé un outil de travail, en particulier une pelle chargeuse ou un appareil d'empilage et sur le chariot arrière, un contrepoids, caractérisé par le fait qu'une partie (42) du contrepoids (36) est maintenue de manière à pouvoir coulisser sur un guide (40) disposé à l'extrémité arrière du chariot arrière et généralement dirigé transversalement à la direction de marche et est accouplée par l'intermédiaire d'une timonerie au chariot avant (14) de telle sorte qu'à chaque braquage correspond un coulissement, en particulier proportionnel, de la partie de contrepoids en sens opposé à celui du braquage.

2. Véhicule selon la revendication 1, caractérisé par le fait qu'au moins une partie du contrepoids (36) disposé en position fixe sur le véhicule est conçue sous forme de glissière de guidage (40) pour le contrepoids coulissant (42).

3. Véhicule selon l'une des revendications 1 et 2, caractérisé par le fait que le contrepoids coulissant (42) présente une largeur qui correspond à environ ¼ de la largeur totale du véhicule.

4. Véhicule selon l'une des revendications précédentes, caractérisé par le fait que le contrepoids coulissant (42), sur ses glissières de guidage, dépasse la largeur du véhicule dans les positions extrêmes.

5. Véhicule selon l'une des revendications précédentes, caractérisé par le fait que comme entraînement du contrepoids coulissant est prévu un moteur hydraulique, en particulier en vérin hydraulique, qui est commandé ou alimenté par l'huile de refoulement d'un dispositif hydraulique de direction.

6. Véhicule selon l'une des revendications 1 à 4, caractérisé par le fait que comme entraînement du contrepoids coulissant est prévu un dispositif de traction à câble (44, 46), relié en particulier au chariot avant (14).

7. Véhicule selon la revendication 6, caractérisé par le fait que le contrepoids coulissant (42) est relié au chariot avant (14) par des tronçons de câble (44, 46) guidés sur des poulies (48 à 54) des deux côtés du chariot arrière et est donc commandé directement par les mouvements de direction de celui-ci.

8. Véhicule selon la revendication 2, caractérisé par le fait que la glissière de guidage (40) présente des guides de glissement supérieur et inférieur qui sont recouverts chacun par le contrepoids coulissant (42) ou sont logés dans un évidement dirigé transversalement.

Fig.1

Fig.2

Fig.3